Europäisches Patentamt

European Patent Office

Office européen des brevets

(11) Veröffentlichungsnummer: **0 043 095**
**B1**

(12) **EUROPÄISCHE PATENTSCHRIFT**

(19)

(45) Veröffentlichungstag der Patentschrift:
12.12.84

(21) Anmeldenummer: 81104870.1

(22) Anmeldetag: 24.06.81

(51) Int. Cl.³: **F 24 J 3/02**

(54) **Dacheindeckung.**

(30) Priorität: 27.06.80 DE 3024135

(43) Veröffentlichungstag der Anmeldung:
06.01.82 Patentblatt 82/1

(45) Bekanntmachung des Hinweises auf die Patenterteilung:
12.12.84 Patentblatt 84/50

(84) Benannte Vertragsstaaten:
AT BE CH DE FR GB IT LI LU NL SE

(56) Entgegenhaltungen:
EP - A - 0 014 682
EP - A - 0 026 862
DE - A - 2 103 457
DE - A - 2 442 503
DE - A - 2 640 333
DE - A - 2 818 475
DE - A - 2 840 806
DE - A - 2 853 287
DE - B - 2 605 927
DE - B - 2 626 958
FR - A - 1 394 139
FR - A - 2 390 557
GB - A - 1 151 795
US - A - 4 204 520

(73) Patentinhaber: Battelle-Institut e.V., Am
Römerhof 35 Postfach 900 160,
D-6000 Frankfurt/Main 90 (DE)

(72) Erfinder: Weibel, Guido, Kleine Strasse 4,
D-3402 Dankelshausen (DE)
Erfinder: Schwämmlein, Wolfgang,
Eleonore-Stearling-Strasse 58,
D-6000 Frankfurt/Main 50 (DE)

(74) Vertreter: Rupprecht, Klaus, Dipl.-Ing., Am Römerhof 35,
D-6000 Frankfurt (Main) 90 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Dacheindeckung aus Dachziegeln auf der Basis von keramischen oder hydraulisch erhärtenden Massen mit durchgehenden, insbesondere vom Dachgiebel zur Traufe verlaufenden, Leitungssystemen zur Aufnahme von flüssigen Wärmetransportmedien. Eine solche Dacheindeckung ist zur Nutzbarmachung von Sonnenenergie besonders geeignet.

Dachabdeckungen, die ein Sonnenkollektorsystem einschließen, sind bekannt. Im allgemeinen sind die Ziegel zweiteilig angefertigt, wobei zwischen den beiden Lagen das Rohrleitungssystem für die Wärmetransportflüssigkeit angebracht wird, siehe z. B. EP-A-0 026 862 (dieses Dokument fällt unter Art. 54(3) EPÜ). Der Vorteil solcher Solarziegel liegt darin, daß die gesamte Dachfläche als Kollektorfläche dienen kann. Die Verlegung solcher Ziegel ist jedoch mit Schwierigkeiten verbunden und der Wärmeübergang zwischen den Ziegellagen und dem Rohrleitungssystem ist gering. Ferner sind besonders gestaltete Dachziegel bekannt, die hohl sind und durch die hindurch der Wärmeträger von dem oberen zum unteren Dachziegel geleitet wird. Bei einer anderen Ausführungsform wird in dem Ziegel eine Leitungsschlange vorgehen, deren Ende und Anfang über weitere Leitungen an übrigen Leitungsschlangen angeschlossen sind (DE-A-2 818 475 und DE-A-2 840 806). Die Konstruktion solcher Ziegel erlaubt jedoch eine optimale Ausnutzung der Sonnenenergie nicht.

Der vorliegenden Erfindung liegt nun die Aufgabe zugrunde, eine Dacheindeckung zu schaffen, mit der ohne Beeinflussung der äußeren Erscheinungsform des Ziegeldachs eine effektive Übertragung der absorbierten Sonnenenergie an die Transportflüssigkeit erfolgen kann. Dabei sollte insbesondere die Stabilität des gesamten Kollektors so hoch sein, wie die eines konventionellen Ziegeldachs und das Leitungssystem für die Wärmetransportflüssigkeit eine genügende Flexibilität aufweisen. Ferner sollten die einzelnen Ziegel zur Eindeckung des Daches durch konventionelle Methoden hergestellt und verlegt werden können.

Es hat sich nun gezeigt, daß sich diese Aufgabe lösen läßt, wenn die Dacheindeckung aus einzelnen Dachziegeln besteht, die einen oder mehrere parallele Kanäle besitzen, welche sich an die Kanäle der angrenzenden Ziegel direkt anschließen, und wenn in die jeweils vom Giebel zur Traufe durchgehenden Kanäle ein thermoplastisch verformbarer, an den Innenwandungen der Kanäle anliegender und elastischer Kunststoffschlauch eingefügt ist. Vorteilhafte Ausführungsformen der erfindungsgemäßen Dacheindeckung sind in den abhängigen Ansprüchen 2 und 3 erläutert.

Wesentliches Merkmal der erfindungsgemäßen Dacheindeckung liegt darin, daß das Wärmetransportmedium im Innern der monolithischen Dachziegel geleitet wird. Dadurch erfolgt die Energieübertragung ausschließlich über Wärmeleitung. Die Kanäle innerhalb der Ziegel verlaufen vorzugsweise in Längsrichtung vom First zur Traufe. Im allgemeinen werden bei einem Ziegel von 25 · 40 cm drei bis fünf parallele Kanäle pro Ziegel vorgesehen.

Äußerlich kann der Dachziegel die übliche Form aufweisen. Wesentlich ist, daß die Kanäle des einen Ziegels beim Verlegen in die Kanäle des angrenzenden Ziegels anschließen. Zur Erhöhung des Strahlungsabsorptionsvermögens kann der Ziegelmasse ein dunkelbrauner bis schwarzer Farbkörper zugegeben werden. Ferner kann der Ziegel mit einer dunkelbraunen bis schwarzen Engobe und/oder einer keramischen Glasur oder einem Kunststoff beschichtet sein. Die Beschichtung muß jedoch für die am Ziegel bzw. an der Engobe reflektierte langwellige Wärmestrahlung undurchlässig sein. Die Rückseite des Ziegels kann ferner mit einem gut wärmeleitenden Material, z. B. Siliciumcarbid, beschichtet werden, um die Wärmeenergiegewinnung zu optimieren.

Nach dem Verlegen der Ziegel wird in die durchgehenden Kanäle ein thermoplastisch verformbarer und elastischer Kunststoffschlauch eingeschoben. Durch eine Wärmebehandlung wird der Kunststoffschlauch unter Druck so verformt, daß er sich an die Kanalwände anlegt und somit einen optimalen Wärmeübergang zwischen Ziegel und Wärmetransportflüssigkeit ermöglicht. Die Wärmebehandlung kann durch Einleitung von heißem Wasser oder Dampf durchgeführt werden. Da der Kunststoff elastisch ist, kann er Ziegelbewegungen unbeschadet überstehen, wobei eine genügende Stabilität bzw. Begehbarkeit des Kollektorsystems gewährleistet ist. Dieses System läßt sich in sonnenarmen Wintermonaten zur Warmwasserzubereitung einsetzen, indem das Rohrleitungssystem an eine Wärmepumpe angeschlossen wird. Dadurch kann das System ganzjährig betrieben werden.

Der Dachziegel wird unter Verwendung einer üblichen Preßmatrize hergestellt. Zum Versehen des Ziegels mit den erforderlichen Kanälen werden in die Matrize vor dem Beschicken Dorne hingeschoben und während bzw. nach dem Öffnungsvorgang der Presse herausgezogen. Es ist auch möglich, daß der Ziegel durch Ausstechen des Formlings durch Hohldorne während des Preßvorgangs mit Kanälen versehen wird. Die Preßmatrize kann auf einer Drehtischpresse, einer Spindelpresse oder einer Revolverpresse angebracht sein.

Die Erfindung wird anhand von lediglich einen Ausführungsweg darstellenden Zeichnungen näher erläutert. Es zeigt in schematischer Vereinfachung.

Fig. 1 den Querschnitt der erfindungsgemäßen Dacheindeckung in Richtung First/Traufe,

Fig. 2 den Querschnitt der erfindungsgemäßen Dacheindeckung in horizontaler Richtung.

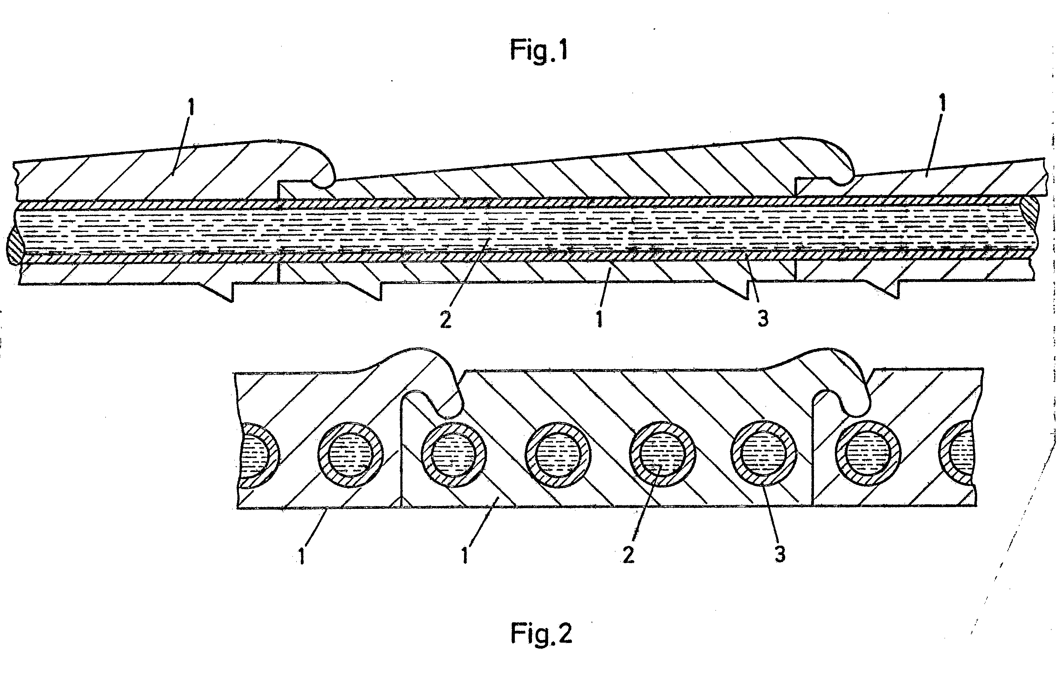

Aus Fig. 1 geht hervor, daß beim Verlegen der Ziegel 1 die Kanäle 2 der Ziegel aneinander anschließen. In diese Kanäle 2 wird dann ein Schlauch 3 aus thermoplastisch verformbarem Kunststoff hineingeschoben und durch eine Wärmebehandlung unter Druck so verformt, daß er sich an die Kanalwände anlegt. Der Ziegel selbst kann äußerlich die konventionellen Formen aufweisen. Wesentlich ist, daß die Kanäle nach dem Verlegen ein durchlaufendes Rohrleitungssystem ergeben.

Aus Fig. 2 geht hervor, daß ein Ziegel 1 mit mehreren parallel zueinander verlaufenden Kanälen 2 versehen werden kann. Vorzugsweise laufen diese Kanäle in der Längsrichtung des Ziegels 1. Es ist jedoch auch möglich, diese in horizontaler Richtung anzubringen.

## Patentansprüche

1. Dacheindeckung aus Dachziegeln (1) auf der Basis von keramischen oder hydraulisch erhärtenden Massen, mit durchgehenden, insbesondere vom Dachgiebel zur Traufe verlaufenden, Leitungssystemen (2) zur Aufnahme von flüssigen Wärmetransportmedien, dadurch gekennzeichnet, daß die einzelnen Dachziegel (1) einen oder mehrere parallele Kanäle (2) besitzen, die sich an die Kanäle der angrenzenden Ziegel direkt anschließen, und daß in die jeweils vom Giebel zur Traufe gehenden Kanäle ein thermoplastisch verformbarer, an den Innenwandungen der Kanäle (2) anliegender und elastischer Kunststoffschlauch (3) eingefügt ist.

2. Dacheindeckung nach Anspruch 1, dadurch gekennzeichnet, daß der Kunststoffschlauch (3) durch Wärmebehandlung unter Druckeinwirkung angelegt ist.

3. Dacheindeckung nach Anspruch 1, dadurch gekennzeichnet, daß die Kanäle (2) in Längsrichtung des einzelnen Dachziegels (1) angebracht und an den schmalen Seiten des Dachziegels offen sind.

## Claims

1. Roofing with tiles (1) on the basis of ceramic or hydraulically setting materials, with continuous pipe systems running from gable to eaves for fluid heat transfer media characterized in that each individual tile (1) has one or more parallel ducts (2) which are directly joining the ducts of the adjacent tiles and that a thermoplastically deformable flexible plastic tube (3) in close contact with the inner walls of the ducts (2) is introduced into the ducts rrunning from gable to eaves.

2. Roofing according to claim 1 wherein the plastic tube (3) is brought in close contact by heat treatment under pressure.

3. Roofing according to claim 1 wherein the ducts (2) run in longitudinal direction of the tile (1) and are open at the narrow sides of the tile.

## Revendications

1. Couverture de toit formé de tuiles (1) à base de masse céramique ou hydraulique durcissable, avec notamment un système de conduites (2) allant du faîte jusqu'aux gouttières pour recevoir des fluides caloporteurs, caractérisée en ce que les différentes tuiles (1) ont un ou plusieurs canaux parallèles (2) qui rejoignent directement les canaux des tuiles adjacentes et en ce qu'un tuyau de matière synthétique (3), élastique, déformable, thermoplastique, est glissé dans les canaux en partant du faîte jusqu'aux gouttières, et ce tuyau s'applique contre les parois intérieures des canaux (2).

2. Couverture de toit selon la revendication 1, caractérisé en ce que le tuyau en matière synthétique (3) est appliqué par traitement thermique sous l'action d'une pression.

3. Couverture de toit selon la revendication 1, caractérisée en ce que les canaux (2) sont dirigés dans la direction longitudinale de chaque tuile et sont ouverts sur les petits côtés de la tuile.

Fig.1

Fig.2